# FASCICULE DE BREVET EUROPEEN

(11) **EP 0 866 355 B1**
(45) Date de publication et mention de la délivrance du brevet: **08.06.2005**
(21) Numéro de dépôt: 98460006.4
(22) Date de dépôt: 18.03.1998
(51) Int. Cl.: G02C 13/00

(54) **Système pour contrôler la qualité des paramétres optiques de deux verres destinés à être montés sur une monture de lunette**
System zur Qualitätskontrolle optischer Parameter zweier zur Fassung in einem Brillengestell bestimmter Gläser
System for controlling the quality of the parameters of two glasses which have to be mounted in a spectacle frame

(30) Priorité: 21.03.1997 FR 9703730
(43) Date de publication de la demande: 23.09.1998
(73) Titulaire: Denis, Jacques, 72005 Le Mans Cédex (FR)
(72) Inventeur: Denis, Jacques, 72005 Le Mans Cédex (FR)
(74) Mandataire: Vidon, Patrice

(56) Documents cités:
- FR-A- 2 362 418
- FR-A- 2 526 653
- FR-A- 2 558 714
- FR-A- 2 620 927

## Description

L'invention concerne le domaine de l'optique et plus précisément celui de la lunetterie.

Plus précisément, l'invention se rapporte aux opérations préalables au montage des verres correcteurs sur les montures de lunette.

L'usinage des verres correcteurs destinés à être montés sur une monture d'une paire de lunettes doit être effectué en tenant compte de plusieurs paramètres optiques dits "paramètres de montage".

Ces paramètres sont déterminés, soit par l'ophtalmologiste prescripteur lors de la consultation du patient, soit par l'opticien. Ils dépendent d'une part de la morphologie du patient, mais également du type de monture choisie par celui-ci ainsi qu'éventuellement de la nature du trouble visuel à corriger. En fonction des cas, le nombre de ces paramètres varie et inclut généralement : le demi-écart pupillaire droit et le demi-écart pupillaire gauche (mesurés du milieu du nez à la pupille), la hauteur du verre droit, la hauteur du verre gauche, l'axage du verre du verre droit, l'axage du verre gauche et éventuellement l'écart temporal.

L'écart pupillaire est constitué par la distance existant entre la pupille et le milieu du nez. Cet écart pupillaire peut varier pour l'oeil droit et pour l'oeil gauche et est différent d'un patient à l'autre. Cet écart pupillaire est généralement déterminé par l'opticien lors de la visite du patient, grâce à un pupillomètre, ou de plus en plus fréquemment, par photographie. Afin de focaliser la lentille (le verre de lunette) sur la rétine, les verres doivent être montés précisément selon ces cotes.

Le deuxième paramètre à prendre en compte est constitué par la hauteur devant être observée entre le centre optique du verre et le bord inférieur de celui-ci. Cette hauteur est classiquement mesurée par une mesure dite "en boxing", au niveau de la tangente à ce bord inférieur.

Le troisième paramètre est constitué par l'axage des verres correspondant à l'orientation que celui-ci doit avoir une fois monté. Cette orientation du verre est capitale dans les cas d'astigmatisme.

Outre ces trois paramètres, un autre paramètre doit être pris en compte dans le cadre du montage de verres sur des paires de lunettes dites "sans monture", c'est-à-dire dont les verres sont uniquement maintenus au niveau du nez et des tenons de branches. Ce quatrième paramètre est constitué par l'écart temporal, c'est-à-dire par l'écart hors-tout devant exister entre les extrémités extérieures des deux verres. Cet écart temporal est également mesuré aux tangentes. Des systèmes pour déterminer ces différents paramètres sont décrit par exemple dans les documents de brevet n° FR-A-2 362 418 et FR-A-2 526 653.

Les verres de lunettes sont usinés en fonction de ces différents paramètres pour ensuite être adaptés sur la monture à laquelle ils sont destinés. Toutefois, avant de procéder au montage, il est indispensable de contrôler les paramètres optiques des verres afin de vérifier qu'ils présentent bien les caractéristiques répondant aux paramètres mentionnés ci-dessus. Ceci est d'autant plus important lorsque le montage est effectué dans un lieu différent de l'usinage, ce qui est fréquemment le cas, notamment lorsque les verres sont usinés sur les lieux de fabrication mais montés chez les opticiens.

Jusqu'alors, la vérification de ces paramètres était effectuée manuellement à l'aide d'une réglette et d'un système de fixation des verres à l'aide de plots, en procédant de la façon suivante :
- traçage préalable sur chaque verre, par exemple au crayon feutre effaçable, d'un trait horizontal et d'un trait vertical passant par le centre optique du verre;
- fixation de chacun des deux verres sur un plot centré sur ledit centre optique ou, selon les machines utilisées, sur le centre géométrique du verre ;
- positionnement d'une cale d'une largeur correspondant à la partie de la monture prévue entre les deux verres ;
- mesure pour chaque verre, à l'aide d'un réglette :
   . de la distance entre le trait horizontal et la tangente au bord inférieur du verre, pour vérifier le paramètre concernant la hauteur du verre ;
   . de la distance entre le centre optique (intersection des deux traits) et le bord de la cale, pour vérifier le paramètre concernant l'écart pupillaire;
   . du parallélisme entre les traits verticaux des deux verres, pour vérifier le paramètre concernant l'axage des verres;
   . de la distance entre les extrémités des deux traits verticaux pour vérifier le paramètre concernant l'écart temporal.

Un tel procédé de contrôle présente toutefois l'inconvénient d'être long à réaliser et d'être en outre peu reproductible d'un utilisateur à l'autre.

L'objectif principal de la présente invention est de proposer un système permettant de contrôler rapidement la qualité d'usinage des verres et de conférer un caractère de reproductibilité aux opérations de contrôle pouvant être mises en oeuvre par un tel dispositif.

Un autre objectif de la présente invention, est de fournir un tel système qui soit d'un emploi facile et rapide et qui puisse être mis en oeuvre sur tout type de verre et sur toute épaisseur de verre.

Ces différents objectifs, ainsi que d'autres qui apparaîtront par la suite, sont atteints grâce à l'invention qui concerne un système pour contrôler la qualité de l'usinage de deux verres destinés à être montés sur une paire de lunettes, caractérisé en ce qu'il comprend:
- un dispositif de calage desdits verres dans une position fixe l'un par rapport à l'autre reproduisant essentiellement la position qu'ils montreront une fois qu'ils auront été ultérieurement montés sur la monture qui leur est destinée,
- des moyens optiques de visée de différents points de mesure desdits verres ;
- des moyens de déplacement relatif dudit dispositif de positionnement desdits verres par rapport auxdits moyens optiques de visée dans au moins un plan horizontal,
- des moyens de mesure des déplacements relatifs observés par lesdits verres par rapport auxdits moyens optiques de visée entre lesdits différents points de mesure desdits verres.

L'invention propose donc un système permettant de normaliser les opérations de vérification et de contrôle de la qualité des paramètres optiques des verres en offrant des moyens permettant d'assurer la reproductibilité de telles opérations.

Par ailleurs, l'invention permet de rationaliser les mesures effectuées pour chaque verre, grâce à leur fixation et à l'utilisation des moyens de mesure des déplacements relatifs observés par lesdits verres par rapport auxdits moyens optiques de visée.

L'invention permet en outre de disposer d'informations permettant de régler les machines utilisées pour le détourage des verres en fonction des anomalies pouvant être relevées lors des mesures effectuées.

Il convient de noter que l'on pourra utiliser différents modes de réalisation du dispositif de calage des verres dans une position donnée. Toutefois, préférentiellement, le dispositif de calage des verres inclut :
- un premier plot destiné à accueillir un des verres et un second plot destiné à accueillir l'autre verre, chacun des plots étant fixé à un porte-plot ;
- une cale centrale correspondant au nez de la personne destinée à porter ladite monture de lunettes ;
- un cale latérale gauche et une cale latérale droite ;
- au moins une cale inférieure ;
- des moyens pour faire tangenter chacun des verres avec la cale centrale, une des cales latérales et ladite cale inférieure.

On notera également que l'on pourra réaliser ces derniers moyens selon différents mode de réalisation. Cependant, selon une variante préférentielle de l'invention, les moyens permettant de faire tangenter chacun des verres avec la cale centrale, une des cales latérales et la cale inférieure, comprennent :
- au moins une première clavette montée perpendiculairement à l'axe longitudinal de la cale centrale, sur laquelle ladite cale centrale est montée fixe et sur laquelle la cale latérale gauche, la cale latérale droite et les porte-plots sont montés coulissants; et,
- au moins une seconde clavette montée parallèlement à l'axe longitudinal de la cale centrale sur laquelle la cale inférieure est montée coulissante.

On notera que l'on pourra aussi envisager différents moyens pour organiser le déplacement relatif du dispositif de calage des verres par rapport aux moyens optiques de visée.

Notamment, selon un mode de réalisation de l'invention, ces moyens de déplacement relatif comprennent :
- un chariot mobile destiné à accueillir ledit dispositif de calage desdits verres ;
- des moyens de guidage dudit chariot selon un premier axe XX' ; et,
- des moyens de guidage selon un second axe YY', orthogonal à l'axe XX', desdits moyens de mesure optique.

On notera que les moyens de guidage pourront avantageusement être motorisés.

Dans un tel mode de réalisation, le chariot supportant le dispositif de calage des verres ne se déplace que selon l'axe XX', tandis que les moyens optiques de visées se déplacent selon l'axe YY'. Grâce à une telle configuration, il est ainsi possible d'explorer n'importer quel point des verres grâce aux moyens optiques de visée.

Selon un autre mode de réalisation, ces moyens de déplacement relatif comprennent :
- un chariot mobile destiné à accueillir ledit dispositif de positionnement desdits verres ;
- des moyens de guidage dudit chariot selon un premier axe XX' ; et,
- des moyens de guidage dudit chariot selon un second axe YY', orthogonal à l'axe XX.

Dans un tel mode de réalisation, le chariot supportant le dispositif de calage des verres se déplace selon l'axe XX' et selon l'axe YY', les moyens de mesure optique visée restant fixe. Grâce à une telle configuration, il est également possible d'explorer n'importe quel point des verres grâce aux moyens optiques de visée.

Bien qu'il sera possible de ne prévoir aucune liaison fixe entre les moyens de visée optique et les moyens de déplacement relatif des verre, ces moyens optiques de visée seront préférentiellement fixés sur une potence. Une telle potence pourra être fixé au chariot mobile ou aux moyens de guidage de ce chariot, en fonction du mode de réalisation sélectionné.

On pourra envisager, plusieurs modes de réalisation des moyens optique de visée. Ceux-ci pourront notamment être constitué par un petit objectif pouvant être utilisé par l'utilisateur pour viser les points de mesure du verre (centre optique symbolisé par la croisement de deux traits orthogonaux, tangente inférieure, tangente à la cale centrale). Toutefois, préférentiellement, ces moyens optiques de visée incluent des moyens d'émission d'un rayon lumineux. L'utilisation d'un tel rayon lumineux apportera finesse et précision à la mesure effectuée.

L'homme de l'art pourra également envisager plusieurs modes de réalisation des moyens de mesure des déplacements relatifs observés par les verres par rapport auxdits moyens optiques de visée. Il pourra notamment utiliser des verniers ou d'autres systèmes gradués. Toutefois, selon une variante préférentielle de l'invention, ces moyens de mesure sont directement reliés aux moyens optiques de visée et à des moyens de calcul automatique des paramètres d'usinage desdits verres.

Selon une variante intéressante de l'invention, de tels moyens de calcul automatique peuvent aussi inclure des moyens de comparaison automatique des paramètres d'usinage mesurés avec des paramètres théoriques requis pour chaque verre afin de valider ou non la conformité de ceux-ci de façon très rapide et reproductible.

L'invention, ainsi que les différents avantages qu'elle présente, seront plus facilement compris grâce à la description qui va suivre, d'un mode non limitatif de réalisation de celle-ci, en référence aux dessins dans lesquels :
- la figure 1 montre une représentation schématique d'un mode de réalisation du dispositif de calage des verres d'un système selon l'invention ;
- la figure 2 montre une représentation schématique d'un mode de réalisation des moyens de déplacement du dispositif de calage des verres dudit système;
- la figure 3 montre de façon schématique une vue latérale dudit système ;
- la figure 4 montre de façon schématique les différentes mesures pouvant être effectués à l'aide dudit système afin de vérifier la qualité de l'usinage des verres ;
- la figure 5 représente une vue latérale d'un système selon l'invention.

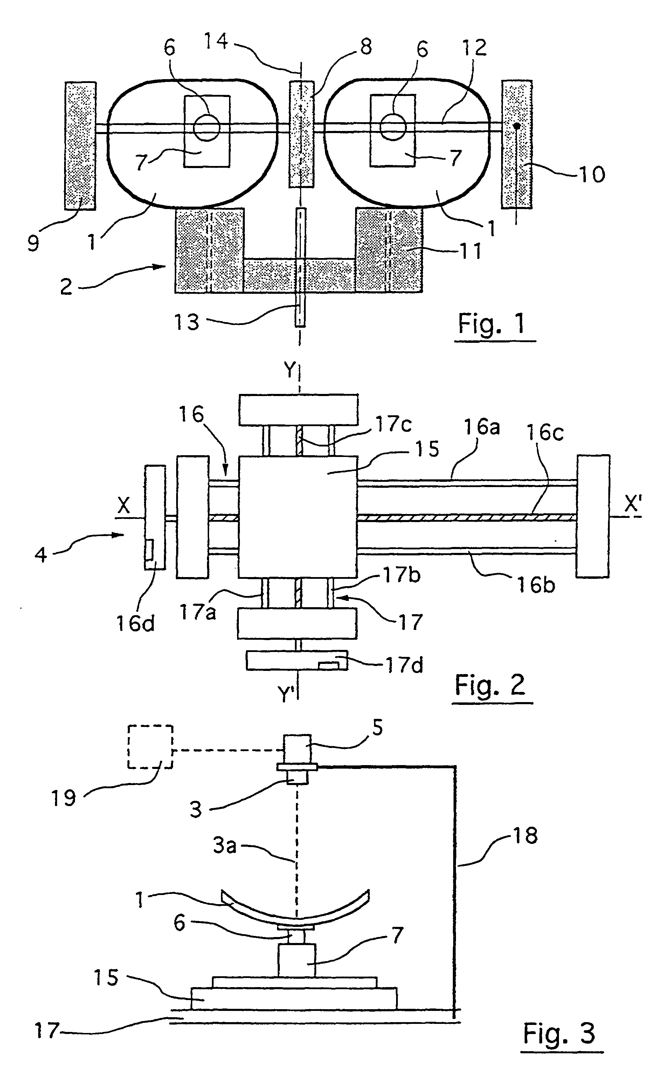

En référence à la figure 1, le système pour contrôler la qualité des paramètres optiques de deux verres 1 destinés à être montés sur une monture de lunette comprend un dispositif de calage 2 de ces verres dans une position fixe l'un par rapport à l'autre reproduisant essentiellement la position qu'ils montreront une fois qu'ils auront été ultérieurement montés sur la monture qui leur est destinée. Sur la figure 1, ce dispositif de calage 2 comprend plusieurs éléments et est désigné dans son ensemble par la référence 2.

Ce dispositif de calage comprend d'une part une pluralité de cales 8,9,10,11, et d'autre part un jeu de deux plots 6 et enfin deux clavettes 12,13. Chacun des plots 6 est fixé sur un porte-plot 7 et permet de fixer chaque verre 1 dans une position déterminée. On notera que ce type de plot est bien connu de l'homme de l'art qui les utilisait déjà lors de l'opération manuelle de contrôle des paramètres d'usinage des verres.

Les différentes cales du dispositif de calage sont constituées par une cale centrale 8 figurant le centre de cette monture, une première cale latérale 9, une deuxième cale latérale 10 et enfin une cale inférieure 11. La cale centrale 8 est fixée à la clavette 12, tandis que les cales latérales 9 et 10 ainsi que les porte-plots 7 sont montés coulissants sur celle-ci selon un axe perpendiculaire à l'axe longitudinal 14 de la cale 8. La cale inférieure 11 est quant à elle montée coulissante sur une clavette 13. On notera que, si dans le présent mode de réalisation on utilise deux clavettes 12,13, il pourra également être envisagé d'utiliser un nombre de clavettes différent dans d'autres modes de réalisation de l'invention.

Comme il sera explicité ci-après plus en détail, les verres 1 sont positionnés sur les plots 6 au niveau de leur centre optique. Une fois que les verres ont ainsi été solidarisés au plot 6 l'ensemble ainsi constitué est fixé sur le porte-plot 7. Ensuite, les verres 1 ainsi que les cales 9 et 10 sont manoeuvrés de façon à amener les verres en butée contre la cale centrale 8, en faisant coulisser ces différents éléments sur la clavette 12. Précédemment, en même temps, ou postérieurement, la cale 11 est amenée en butée contre le bord inférieur des verres 1. La clavette 12 et la clavette 11 permettent ainsi de faire tangenter chacun des verres à la fois avec la cale centrale 8, une des cales latérales 9, 10 et la cale inférieure 11 du dispositif de calage 2.

Grâce à ces différentes manipulations, les verres se trouvent ainsi calés dans une position correspondant à celle qu'ils adopteront une fois qu'ils seront montés sur la monture qui leur est destinée.

Le système selon l'invention comprend également des moyens de déplacement relatifs 4 du dispositif de calage 2 des verres 1 représenté à la figure 1. Ces moyens de déplacement relatifs sont représentés schématiquement à la figure 2.

Ces moyens de déplacement 4 du dispositif de calage 2 incluent un chariot mobile 15 sur lequel le dispositif de calage 2 peut être fixé, ainsi que des moyens de guidage 16 du chariot selon un premier axe XX' et des moyens de guidage 17 selon un axe YY', orthogonal à l'axe XX' de moyens de mesure optiques qui seront décrits après plus en détail. Les moyens de guidage 16 du chariot incluent deux coulisseaux 16a, 16b traversant de part en part le chariot mobile 15 ainsi qu'une vis sans fin 16c coopérant avec un alésage prévu dans le chariot mobile et pouvant être manipulée grâce à une molette 16d de façon à provoquer le déplacement selon l'axe XX' du chariot mobile 15 supportant le dispositif de calage 2 et des verres 1.

De la même façon, les moyens de guidage 17 incluent deux coulisseaux 17a, 17b ainsi qu'une vis sans fin 17c pouvant être manoeuvrée par un molette 17d de façon à provoquer le déplacement selon l'axe YY' de moyens de visée 3. Les moyens de visée 3 utilisés dans le cadre du présent mode de réalisation de l'invention incluent des moyens d'émission d'un rayon lumineux 3a et sont directement reliés à des moyens de mesure 5 permettant de mesurer automatiquement les déplacements relatifs des verres 1, et à des moyens de calcul automatique 19 des paramètres d'usinage correspondants à ces mesures.

Comme on peut le voir sur la figure 3, ces moyens optiques de visée sont montés sur une potence 18 reliée aux moyens de guidage 17.

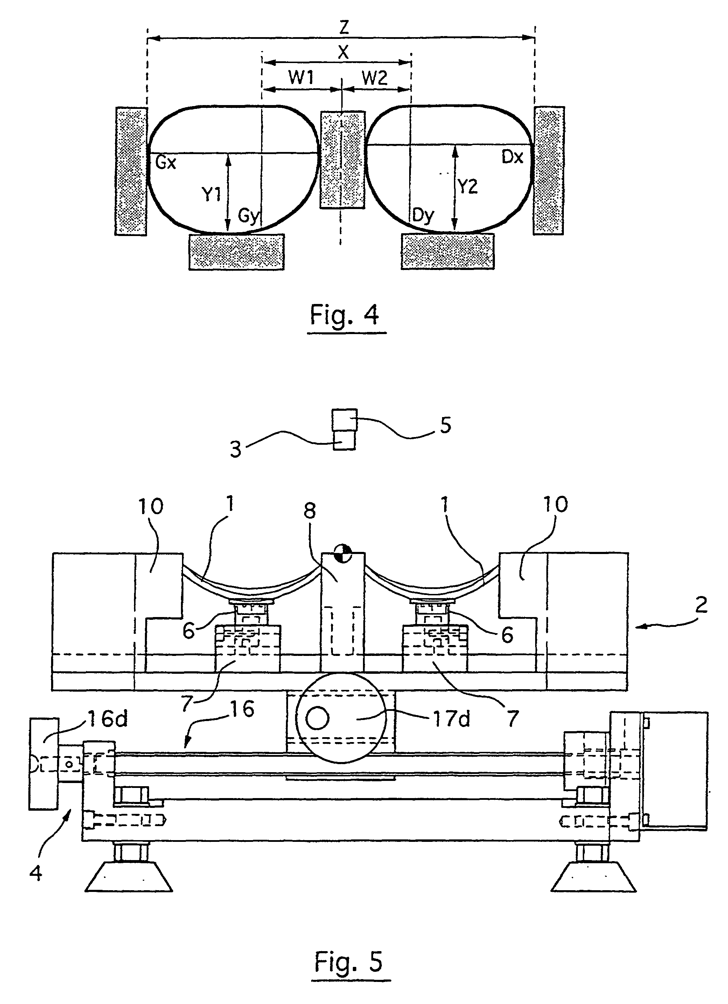

La figure 4 montre une vue latérale du système selon l'invention, intégrant le dispositif de calage des verres 2, les moyens optiques de visée 3 et les moyens de mesure des déplacements relatifs 5 des verres 1 par rapport aux moyens optiques de visée 3 incluant.

En référence à la figure 5, lors de la mise en oeuvre du système selon l'invention, l'utilisateur procède aux différentes étapes de mise en oeuvre. Dans un premier temps, il trace sur chaque verre détouré un trait horizontal et un trait vertical passant par le centre optique du verre en question. Ensuite, il fixe un plot au niveau du centre optique du verre et positionne l'ensemble ainsi constitué sur un des contre-plots 7 du dispositif de calage 2. Il procède de même pour l'autre verre et cale ensuite les verres en position grâce au dispositif de calage en manipulant les cales 9, 10 et 11. Une fois cette opération effectuée, il peut mettre en oeuvre les moyens de calcul 5 et les moyens de mesure optique 3 de façon à relever différents points de mesure sur les verres en organisant un déplacement relatif de ceux-ci par rapport au rayon lumineux 3 émis par les moyens optiques de visée en agissant tantôt sur la molette 17d pour effectuer un déplacement relatif des verres selon l'axe YY' et tantôt sur la molette 16d pour provoquer un déplacement relatif des verres selon l'axe XX'. Il peut ainsi mesurer sur l'axe XX' du système les écarts pupillaires correspondant aux cotes W1, W2 et X montrées sur la figure 5. Il peut également déterminer l'écart temporal par la cote Z puis les hauteurs Y1 et Y2 selon l'axe YY' du système. Il peut enfin contrôler le parallélisme des droites Gx et Dx traduisant l'axage des verres.

Le mode de réalisation de l'invention ici décrit n'a pas pour objet de réduire la portée de l'invention. Il pourra donc y être apporté de nombreuses modifications sans sortir du cadre de celle-ci. Notamment on notera que les moyens de guidage du chariot pourront être motorisés.

## Revendications

1. Système pour contrôler la qualité des paramètres optiques de deux verres destinés à être montés sur une monture de lunette, **caractérisé en ce qu'**il comprend :
- un dispositif de calage (2) desdits verres (1) dans une position fixe l'un par rapport à l'autre reproduisant essentiellement la position qu'ils montreront une fois qu'ils auront été ultérieurement montés sur la monture qui leur est destinée,
- des moyens optiques de visée (3) de différents points de mesure desdits verres (1) ;
- des moyens de déplacement relatif (4) dudit dispositif de calage (2) desdits verres par rapport auxdits moyens optiques de visée (3) dans au moins un plan horizontal,
- des moyens de mesure (5) des déplacements relatifs observés par lesdits verres (1) par rapport auxdits moyens optiques de visée (3) entre lesdits différents points de mesure desdits verres (1).

2. Système selon la revendication 1 **caractérisé en ce que** ledit dispositif de calage (2) desdits verres (1) inclut:
- un jeu de deux plots 6 destiné à accueillir lesdits verres (1), chacun desdits plots étant fixé à un porte-plot (7) ;
- une cale centrale (8) correspondant au nez de la personne destinée à porter ladite monture ;
- un cale latérale gauche (9) et une cale latérale droite (10) ;
- au moins une cale inférieure (11) ;
- des moyens (12,13) pour faire tangenter chacun desdits verres avec ladite cale centrale (8), une desdites cales latérales (9,10) et ladite cale inférieure (11).

3. Système selon la revendication 2 **caractérisé en ce que** lesdits moyens permettant de faire tangenter chacun desdits verres (1) avec ladite cale centrale (8), une desdites cales latérales (9,10) et ladite cale inférieure (11), comprennent :
- au moins une première clavette (12) montée perpendiculairement à l'axe longitudinal (14) de la cale centrale (8), sur laquelle ladite cale centrale (8) est montée fixe et sur laquelle ladite cale latérale gauche (9), ladite cale latérale droite (10) et lesdits porte-plots (7) sont montés coulissants; et,
- au moins une seconde clavette (13) montée parallèlement à l'axe longitudinal (14) de ladite cale centrale (8) sur laquelle ladite cale inférieure (11) est montée coulissante.

4. Système selon la revendication 1 à 3 **caractérisé en ce que** lesdits moyens de déplacement relatif (4) dudit dispositif de calage desdits verres par rapport auxdits moyens optiques de visée comprennent :
- un chariot mobile (15) destiné à accueillir ledit dispositif de calage (2) desdits verres (1);
- des moyens de guidage (16) dudit chariot selon un premier axe XX' ; et,
- des moyens de guidage (17) selon un second axe YY', orthogonal à l'axe XX', desdits moyens de mesure optique (3).

5. Système selon la revendication 1 à 3 **caractérisé en ce que** lesdits moyens de déplacement relatif dudit dispositif de calage desdits verres par rapport auxdits moyens optiques de visée comprennent :
- un chariot mobile destiné à accueillir ledit dispositif de positionnement desdits verres ;
- des moyens de guidage dudit chariot selon un premier axe XX' ; et,
- des moyens de guidage dudit chariot selon un second axe YY', orthogonal à l'axe XX.

6. Système selon la revendication 4 ou 5 **caractérisé en ce que** lesdits moyens optiques de visée (3) sont fixés sur une potence (18).

7. Système selon l'une des revendications 1 à 6 **caractérisé en ce que** lesdits moyens optiques de visée (3) incluent des moyens d'émission d'un rayon lumineux (3a).

8. Système selon l'une des revendications 1 à 6 **caractérisé en ce que** lesdits moyens de mesure (5) sont directement relié auxdits moyens optiques de visée et à des moyens de calcul automatique (19) des paramètres d'usinage desdits verres.

9. Système selon la revendication 8 **caractérisé en ce que** lesdits moyens de calcul automatique (19) des paramètres d'usinage desdits verres incluent des moyens de comparaison automatique desdits paramètres d'usinage avec les paramètres théoriques requis pour chaque verre.

10. Système selon l'une des revendications 4 à 9 **caractérisé en ce que** lesdits moyens de guidage (16,17) sont motorisés.

## Patentansprüche

1. System zur Kontrolle der Qualität der optischen Parameter zweier Gläser, die in ein Brillengestell eingesetzt werden sollen, **dadurch gekennzeichnet, dass** es folgendes umfasst:
- eine Vorrichtung zum Festhalten (2) der Gläser (1) in einer im Verhältnis zu einander festen Position, die im Wesentlichen die Position wiedergibt, welche die Gläser später nach ihrem Einsatz in das Brillengestell einnehmen sollen,
- optische Mittel zum Anvisieren (3) verschiedener Messpunkte der Gläser (1);
- Mittel zur relativen Bewegung (4) der Vorrichtung zum festen Positionieren (2) der Gläser im Verhältnis zu den optischen Mitteln zum Anvisieren (3) in mindestens einer horizontalen Ebene;
- Mittel zum Messen (5) der von den Gläsern (1) im Verhältnis zu den optischen Mitteln zum Anvisieren (3) zwischen den verschiedenen Messpunkten der Gläser (1) beobachteten relativen Bewegungen.

2. System nach Anspruch 1, **dadurch gekennzeichnet, dass** die Vorrichtung zum festen Positionieren (2) der Gläser (1) folgendes umfasst:
- einen Satz zweier Klötze 6, welche die Gläser (1) aufnehmen sollen, wobei jeder dieser Klötze auf einem entsprechenden Klotzträger (7) befestigt ist;
- ein mittlerer Keil (8), welcher der Nase der Person entspricht, für die das Brillengestell angefertigt wird;
- ein linker seitlicher Keil (9) und ein rechter seitlicher Keil (10);
- mindestens einen unteren Keil (11);
- Mittel (12, 13), um jedes der Gläser den mittleren Keil (8), einen der seitlichen Keile (9, 10) und den unteren Keil (11) tangential berühren zu lassen.

3. System nach Anspruch 2, **dadurch gekennzeichnet, dass** die Mittel um jedes der Gläser (1) durch den mittleren Keil (8), einen der seitlichen Keile (9, 10) und den unteren Keil (11) tangential berühren zu lassen, folgendes umfassen:
- mindestens einen ersten Langzapfen (12), der senkrecht zur Längsachse (14) des mittleren Keils (8) angebracht ist, auf welchem dieser mittlere Keil (8) fest montiert ist und auf dem der linke seitliche Keil (9), der rechte seitliche Keil (10) und die Klotzträger (7) so angebracht sind, dass sie sich gleitend verschieben lassen und,
- mindestens einen zweiten Langzapfen (13), der parallel zur Längsachse (14) des mittleren Keils (8) angebracht ist und auf dem der untere Keil (11) so angebracht ist, dass er sich gleitend verschieben lässt.

4. System nach einem der Ansprüche 1 bis 3, **dadurch gekennzeichnet, dass** die Mittel zur relativen Bewegung (4) der Vorrichtung zum festen Positionieren der Gläser im Verhältnis zu den optischen Mitteln zum Anvisieren folgendes umfassen:
- einen beweglichen Wagen (15), der die Vorrichtung zum festen Positionieren (2) der Gläser (1) aufnehmen soll;
- Führungsmittel (16) des Wagens nach einer ersten Achse XX' und,
- Führungsmittel (17) der Mittel zum optischen Messen (3) nach einer zweiten, zur ersten Achse XX' senkrechten Achse YY'.

5. System nach einem der Ansprüche 1 bis 3, **dadurch gekennzeichnet, dass** die Mittel zur relativen Bewegung der Vorrichtung zum festen Positionieren der Gläser im Verhältnis zu den optischen Mitteln zum Anvisieren folgendes umfassen:
- einen beweglichen Wagen, der die Vorrichtung zum festen Positionieren der Gläser aufnehmen soll;
- Führungsmittel des Wagens nach einer ersten Achse XX' und,
- Führungsmittel des Wagens nach einer zweiten, zur ersten Achse XX' senkrechten Achse YY'.

6. System nach einem der Ansprüche 4 oder 5, **dadurch gekennzeichnet, dass** die optischen Mittel zum Anvisieren (3) auf einem Auslegerarm (18) befestigt sind.

7. System nach einem der Ansprüche 1 bis 6, **dadurch gekennzeichnet, dass** die optischen Mittel zum Anvisieren (3) über Mittel zum Senden eines Lichtstrahls (3a) verfügen.

8. System nach einem der Ansprüche 1 bis 6, **dadurch gekennzeichnet, dass** die Messmittel (5) direkt mit den optischen Mitteln zum Anvisieren sowie mit Mitteln zum automatischen Berechnen (19) der Verarbeitungsparameter der Gläser verbunden sind.

9. System nach Anspruch 8, **dadurch gekennzeichnet, dass** die Mittel zum automatischen Berechnen (19) der Verarbeitungsparameter der Gläser über Mittel zum automatischen Vergleich dieser Verarbeitungsparameter mit den für jedes Glas erforderlichen theoretischen Parametem verfügen.

10. System nach einem der Ansprüche 4 bis 9, **dadurch gekennzeichnet, dass** die Führungsmittel (16, 17) durch einen Motor angetrieben werden.

## Claims

1. A system for controlling the quality of the optical parameters of two glasses intended to be mounted in a spectacle frame, **characterised in that** it comprises:
- a device for immobilising (2) the said glasses (1) in a position fixed with respect to one another, substantially reproducing the position which they will adopt once they have been later mounted in the frame intended for them,
- optical means (3) for lining up different points of measurement for the said glasses (1);
- means (4) of relatively displacing the said device (2) for immobilising the said glasses with respect to the said optical means (3) for lining up, in at least one horizontal plane;
- means (5) of measuring the relative displacements performed by the said glasses (1) with respect to the said optical means (3) for lining up between the said different points of measurement for the said glasses (1).

2. A system according to Claim 1, **characterised in that** the said device (2) for immobilising the said glasses (1) includes:
- a set of two pegs 6 intended to receive the said glasses (1), each of the said pegs being fixed to a peg holder (7);
- a central block (8) corresponding to the nose of the person intended to wear the said frame;
- a left-hand lateral block (9) and a right-hand lateral block (10);
- at least one lower block (11);
- means (12, 13) of bringing each of the said glasses into a tangential position with respect to the said central block (8), one of the said lateral blocks (9, 10) and the said lower block (11).

3. A system according to Claim 2, **characterised in that** the said means allowing each of the said glasses (1) to be brought into a tangential position with respect to the said central block (8), one of the said lateral blocks (9, 10) and the said lower block (11) comprise:
- at least a first wedge (12) mounted perpendicular to the longitudinal axis (14) of the central block (8), on which the said central block (8) is mounted to be fixed and on which the said left-hand lateral block (9), the said right-hand lateral block (10) and the said peg holders (7) are mounted to slide; and
- at least a second wedge (13) mounted parallel to the longitudinal axis (14) of the said central block (8), on which the said lower block (11) is mounted to slide.

4. A system according to Claims 1 to 3, **characterised in that** the said means (4) of relatively displacing the said device for immobilising the said glasses with respect to the said optical means for lining up comprise:
- a movable carriage (15) intended to receive the said device (2) for immobilising the said glasses (1);
- means (16) of guiding the said carriage along a first axis XX'; and
- means (17) of guiding along a second axis YY', which is at a right angle to the axis XX', the said optical means (3) of measurement.

5. A system according to Claims 1 to 3, **characterised in that** the said means of relatively displacing the said device for immobilising the said glasses with respect to the said optical means of lining up comprise:
- a movable carriage intended to receive the said device for positioning the said glasses;
- means of guiding the said carriage along a first axis XX'; and
- means of guiding the said carriage along a second axis YY', which is at a right angle to the axis XX'.

6. A system according to Claim 4 or 5, **characterised in that** the said optical means (3) of lining up are fixed to a bracket (18).

7. A system according to one of Claims 1 to 6, **characterised in that** the said optical means (3) of lining up include means of emitting a ray (3a) of light.

8. A system according to one of Claims 1 to 6, **characterised in that** the said means (5) of measurement are directly connected to the said optical means of lining up and to means (19) of automatically calculating parameters for machining the said glasses.

9. A system according to Claim 8, **characterised in that** the said means (19) of automatically calculating parameters for machining the said glasses include means of automatically comparing the said machining parameters with the theoretical parameters required for each glass.

10. A system according to one of Claims 4 to 9, **characterised in that** the said means (16, 17) of guiding are motor-driven.
